# EUROPÄISCHE PATENTSCHRIFT

(11) **EP 1 603 280 B1**
(45) Veröffentlichungstag und Bekanntmachung des Hinweises auf die Patenterteilung: **02.03.2011**
(21) Anmeldenummer: 05090130.5
(22) Anmeldetag: 09.05.2005
(51) Int. Cl.: H04W 12/10

(54) **Verfahren zur drahtlosen Übertragung von Information**
Method for wireless transmission of information
Méthode de transmission d'information sans fil

(30) Priorität: 01.06.2004 DE 102004027352
(43) Veröffentlichungstag der Anmeldung: 07.12.2005
(73) Patentinhaber: GSP Sprachtechnologie Gesellschaft für elektronische Sprachsysteme mbH, 12247 Berlin (DE)
(72) Erfinder: Nulis, Kostas, c/o GSP Sprachtechnologie G.f.e.S., 12247 Berlin (DE); Loebner, Helmut, Dr. c/o GSP Sprachtechnologie G.f, 12247 Berlin (DE)
(74) Vertreter: Jungblut, Bernhard Jakob

(56) Entgegenhaltungen:
- EP-A- 1 406 464
- DE-A1- 4 027 186

## Beschreibung

### Gebiet der Erfindung.

Die Erfindung betrifft ein Verfahren zur drahtlosen Übertragung von Informationen zwischen einem beweglichen Objekt und einem stationären Objekt, wobei das bewegliche Objekt zumindest einen Sender und das stationäre Objekt zumindest einen Empfänger aufweist. Der Begriff der drahtlosen Übertragung meint insbesondere die Übertragung mittels modulierter Funkwellen. Dabei kann die rt der Modulation grundsätzlich beliebig sein.

### Stand der Technik und Hintergrund der Erfindung.

Ein Verfahren der eingangs genannten Art ist beispielsweise aus der Praxis als sogenannter Zug- Rangier-und/oder Betriebsfunk für schienengebundene Fahrzeuge bekannt. Ein Beispiel wird im Dokument DE 4027186 A1 dargestellt, wo ein drahtloses Datenübertragungssystem vorliegt für Schienenfahrzeuge. Dabei werden Daten in zwei parallelen Strömen in unterschiedlichen Frequenzen übertragen, von einem Wagen zum Anderen, oder zu einer ortsfesten Station Hierbei werden als Inhaltsinformationen Zugsteuerungssignale, Diagnosesignale, Überwachungssignale, Fahrgastinformationssignale etc. zwischen einem schienengebundenen Fahrzeug und einer stationären Stelle ausgetauscht. Im Falle der Bahn wird zur Übertragung solcher Inhaltsinformationen derzeit mit acht verschiedenen analogen Funksystemen klassischer Art gearbeitet. Dies ist aufwändig und auch nicht hinreichend sicher gegen Abhören und Manipulation durch nicht berechtigte Personen. Zudem treten Probleme im internationalen Zugverkehr dadurch auf, dass die insofern bekannten analogen Funksysteme von Land zu Land variieren und insofern keine internationale Kompatibilität gegeben ist. Schließlich ist die Datenübertragungsrate sehr gering, insbesondere ist deshalb keine Bildübertragung möglich.

Aus der Praxis bekannt sind die GSM Funknetze. GSM steht für **G**lobal **S**ystem for **M**obile Communication und ist international standardisiert (z. B. ETSI, European Telecommunications Standard Institute). Es handelt sich um ein zelluläres Netz. Ca. 370 GSM Netze sind derzeit in 142 Ländern in Betrieb. Durch die Standardisierung können GSM Funkgeräte ohne weiteres auch grenzüberschreitend eingesetzt werden. Die Inhaltsinformationen werden dabei, falls erforderlich zunächst digitalisiert, dann digital in einen GSM Sender eingespeist und der Sender hiermit moduliert. Ein GSM Empfänger demoduliert dieses Signal und führt ggf. eine digital/analog Wandlung durch. Durch die digitale Übertragung ist eine relativ gute Sicherheit gegen Störungen einer Funkverbindung gegeben. GSM 1800 (1800 MHz) wird im E-Netz verwendet, GSM 900 (900 MHz) im D-Netz. In den USA findet GSM 1900 (1900 MHz) Anwendung.

Aus der Praxis ist des Weiteren GSM-R bekannt. Hierbei handelt es sich um ein eigenständiges geschlossenes GSM Netz der Bahn. Es ist standardisiert durch UIC (Union International de Chemi de Fer) und implementiert gemäß ERTMS (European Rail Traffic Management System).

Den GSM Netzen gemeinsam ist, dass verschiedene Teilnehmer durch eine Rufnummer unterscheidbar sind. Die Rufnummern sind dabei sogenannten Endgeräten zugeordnet. Wird beispielsweise ein GSM-R Endgerät in einem Zug, beispielsweise einem Zugführerstand, angebracht, so ist diesem Zug dann die GSM Rufnummer zugeordnet.

Auch bei den insofern bekannten GSM Netzen besteht die Gefahr des Abhörens und/oder der Manipulation durch Unbefugte. Die Datenübertragungsrate ist zudem vergleichsweise niedrig. Dies gilt auch für UMTS im Fernbereich.

Aus der Praxis weiterhin bekannt ist WLAN. WLAN steht für **W**ireless **L**okal **A**rea **N**etwork. Für die drahtlose Übertragung werden Funksignale verwendet. Die Funksignale ersetzen dabei die kabelgebundene Signalübertragung klassischer LAN Netze. WLAN ist derzeit normiert gemäß der IEEE (Institute of Electrical ans Electronic Engineers) Norm 802.11 und arbeitet im 2,4 GHz und 5 GHz Band. Es versteht sich, dass WLAN mit Modulation durch digitale Signale bzw. Inhaltsinformation arbeitet. Mit WLAN können hohe Übertragungsraten über Reichweiten von meist nicht mehr als 100 m übertragen werden. Auch WLAN Signale sind mit den Risiken unbefugten Abhörens und Manipulation behaftet.

Insbesondere bei der Steuerung und Überwachung von schienengebundenen Fahrzeugen besteht ein besonderer Bedarf an einer sicheren Informationsübertragung, i.e. Sicherheit vor Abhören sowie Sicherheit vor Manipulation, beispielsweise durch Generierung und Emission eines gleichsam gefälschten Signals durch einen Unbefugten, da die Betriebssicherheit solcher Fahrzeuge essentiell von der Sicherheit der Informationsübertragung abhängt.

### Technisches Problem der Erfindung.

Daher liegt der Erfindung das technische Problem zu Grunde, ein Verfahren zur Informationsübertragung zwischen Fahrzeugen und stationären Objekten anzugeben, welches besonders abhör- und manipulationssicher ist und zudem eine hohe Datenübertragungsrate erlaubt.

### Grundzüge der Erfindung und Ausführungsformen.

Zur Lösung dieses technischen Problems lehrt die Erfindung, dass das bewegliche Objekt zwei Sender aufweist, welche auf unterschiedlichen Funkfrequenzen Signale emittieren, dass das stationäre Objekt zwei Empfänger zum Empfang der Signale der zwei Sender aufweist, wobei ein Signal des ersten Senders mit einem Signal des zweiten Senders mittels je einer Zuordnungskennung in beiden Signalen miteinander korreliert und dann beide Signale emittiert werden, wobei die zwei Empfänger das Signal des ersten Senders und das damit korrelierte Signal des zweiten Senders empfangen und einer Auswerteinheit zuführen, wobei in der Auswerteinheit die Zuordnungskennung des Signales des ersten Senders und die Zuordnungskennung des Signales des zweiten Senders miteinander auf Korrelation verglichen werden, und wobei im Falle der Korrelation zumindest die Informationen eines der Signale zur weiteren Verarbeitung ausgegeben werden.

Mit der Erfindung wird erreicht, dass ein Abhören und/oder Manipulieren eines (auch verschlüsselten) Signales nahezu unmöglich wird. Denn Zugang zu einer vollständigen übertragenen Information oder Aussenden einer manipulativen Information würde das gleichzeitige Abhören und/oder Emittieren von zwei verschiedenen Funksignalen erfordern. Dies ist jedoch praktisch kaum möglich.

Eine Zuordnungskennung ist grundsätzlich ein Code, wobei zwei einander zugeordnete Zuordnungskennungen im einfachsten Falle gleich sind. Dann reicht ein Identitätsvergleich in der Auswerteeinheit aus. Es ist aber auch möglich, dass die beiden einander zugeordneten Zuordnungskennungen verschieden sind. Dann enthält eine Steuereinheit für die beiden Sender eine Tabelle mit einander zugeordneten verschiedenen Zuordnungskennungen, i.e. Zuordnungskennungspaare. In der Auswerteinheit ist eine identische Tabelle abgespeichert, wobei dann das empfangene Zuordnungskennungspaar mit den abgespeicherten Zuordnungskennungspaaren verglichen wird. Wird eine Übereinstimmung festgestellt, so liegt eine Korrelation vor. Dabei reicht im Grunde ein Zuordnungskennungspaar aus. Eine erhöhte Sicherheit wird jedoch enthalten, wenn eine Vielzahl verschiedener Zuordnungskennungspaare in den Tabellen vorgesehen ist. Denn dann kann senderseitig mit wechselnden Zuordnungskennungen bzw. Zuordnungskennungspaaren gearbeitet werden. Das Wechseln kann dabei durch regelmäßige Fortschaltung von einem Zuordnungskennungspaar zu einem nächsten Zuordnungskennungspaar usw., und wieder beginnend beim ersten Zuordnungspaar, erfolgen. Es ist aber auch möglich, in der Steuereinheit einen Zufallsgenerator vorzusehen, welcher für jede Emission zufallsbasiert ein Zuordnungskennungspaar auswählt und anwendet. In dieser Variante wird eine besonders hohe Sicherheit erhalten.

Bevorzugt ist es, wenn eines der beiden Signale des ersten und des zweiten Senders als Information einen Schlüsselcode und das andere Signal als Information eine Inhaltsinformation enthält. Es ist aber auch möglich, dass beide Signale Inhaltsinformationen enthalten. Ein Schlüsselcode kann vorzugsweise ein variabler Code, i.e. sich zeitlich ändernder Code, sein. Dann wird die Inhaltsinformation mit dem Schlüsselcode mit dem zu einem Zeitpunkt t1 geltenden Code verschlüsselt und emittiert. Zugleich oder davor oder danach wird der zum Zeitpunkt t1 geltende Code als Schlüsselcode emittiert. Beide Signale werden von den beiden Empfängern empfangen und zunächst anhand der Zuordnungskennungen, die in beiden Signalen enthalten sind, einander zugeordnet. Dann kann in der Auswerteinheit mittels des zugeordneten Codes (t1) die mit den Code (t1) verschlüsselte Inhaltsinformation entschlüsselt werden. Es ist aber auch möglich, in einer einfachen Variante der Erfindung mit einem Festcode, i.e. zeitlich invarianten Schlüsselcode zu arbeiten. Dann kann, muss aber nicht, zudem die Zuordnungskennung durch den Schlüsselcode gebildet sein oder diesen enthalten. In diesem Falle wird die Inhaltsinformation mit dem Schlüsselcode verschlüsselt und übertragen. Gleichzeitig, davor oder danach wird der Schlüsselcode von anderen Sender übertragen. In der Auswerteinheit wird dann wiederum eine Entschlüsselung mittels des empfangenen Schlüsselcodes vorgenommen. Wenn die Zuordnungskennung den Schlüsselcode enthält, wird dieser auch mit dem Signal der Inhaltsinformation übertragen, so dass insofern Redundanz gegeben ist.

Bevorzugt ist es, wenn das Signal des ersten Senders ein WLAN Signal und das Signal des zweiten Senders ein GSM, insbesondere ein GSM-R, Signal ist. Dabei wird es zweckmäßig sein, wenn über das GSM Signal neben der Zuordnungskennung und ggf. dem Schlüsselcode nur wenige oder gar keine Inhaltsinformationen übertragen werden, da die Übertragungsraten in GSM Signalen vergleichsweise niedrig sind (beispielsweise 1 bis 10 kbit/s, insbes. 4,8 kbit/s).

Dagegen bietet sich das WLAN Signal für die Übertragung der Inhaltsinformationen an, da dabei hohe Übertragungsraten (1 bis 100 Mbit/s, insbes. 11 bis 54 Mbit/s) realsierbar sind. Dies ist insofern auch zweckmäßig, da die Reichweite eines WLAN Signals kaum mehr als 100 m beträgt und ein sich sehr schnell bewegendes Fahrzeug in sehr kurzer Zeit diesen Reichweitenradius durchfährt. Innerhalb dieser kurzen Zeit muss jedoch ggf. umfangreiche Inhaltsinformation sicher übertragen werden.

Bevorzugterweise ist das bewegliche Objekt ein schienengebundenes Fahrzeug. Die Erfindung ist aber auch beispielsweise bei Bussen oder anderen Fahrzeugen des ÖPNV einsetzbar. Die Inhaltsinformation ist beispielsweise ausgewählt aus der Gruppe bestehend aus "Fahrzeuginformationen, Fahrinformationen, Fahrgastinformationen und Kombinationen solcher Informationen". Fahrzeuginformationen sind beispielsweise Identitätskennungen des Fahrzeuges und/oder Eigenschaftsinformationen zum Fahrzeug. Fahrinformationen umfassen Informationen über Betriebszustände von Aggregaten des Fahrzeuges, Diagnoseinformationen zu solchen Aggregaten, Positionsinformationen (z.B. GPS bestimmt) und/oder Geschwindigkeitsinformationen. Fahrgastinformationen umfassen Informationen über Fahrgäste in einem Fahrzeug (Anzahl, Identität, Sitzplatz etc.), aber auch Informationen, die Fahrgästen zur Verfügung gestellt werden, wie Restfahrzeit bis zu einer Destination, Informationen zu Anschlüssen bei einer Destination, Dienstleistungsangebote in den Fahrzeug, etc.

Während vorstehend nur eine Signalübertragung vom beweglichen zum stationären Objekt beschrieben wurde, versteht es sich, dass auch eine umgekehrte Signalübertragung möglich und meist zweckmäßig ist (bidirektionaler Funkverkehr, Funkdialog). Dann wird das stationäre Objekt zusätzlich zwei Sender aufweisen, welche auf unterschiedlichen Funkfrequenzen Signale emittieren, und das bewegliche Objekt zwei Empfänger zum Empfang der Signale der zwei Sender des stationären Objektes aufweisen, wobei Signale in der Übertragung von Sendern des beweglichen Objektes zu Empfängern des stationären Objektes entsprechender Weise übertragen werden. Es gelten insofern die vorstehenden Ausführungen in ganz analoger Weise. Die vom stationären Objekt emittierte Inhaltsinformationen können dann beispielsweise Fahrzeugsteuerungsinformationen und/oder Fahrgastinformationen sind. Fahrzeugsteuerungsinformationen umfassen Steuersignale (angezeigt auf einem Display für einen Fahrzeugführer und/oder in zu steuernde Aggregate eingespeist), mittels welcher Fahrzustände, wie Geschwindigkeit, gesteuert werden.

Die Erfindung betrifft auch ein Informationsübertragungssystem zur Durchführung eines erfindungsgemäßen Verfahrens, mit zwei miteinander verbundenen beweglichen Sendern, wobei die Sender von einer Steuereinheit gesteuert werden, mit zwei stationären Empfängern, wobei die stationären Empfänger mit einer Auswerteinheit verbunden sind, wobei die Steuereinheit ein Betriebsprogramm enthält, welches ein Signal des ersten Senders mit einer Zuorndungskennung sowie einem Schlüsselcode moduliert und ein Signal des zweiten Senders mit einer der Zuordnungskennung des Signals des ersten Senders korrelierten zweiten Zuordnungskennung sowie einer Inhaltsinformation moduliert. Grundsätzlich gelten die zum Verfahren getroffenen Anmerkungen analog, insbesondere zur vorzugsweisen bidirektionalen Ausgestaltung.

Im Falle der Einsatzes eine WLAN Signals wird es sich empfehlen, dass für den Empfang des WLAN Signales eine Vielzahl von Empfängern in einem räumlichen Bereich verteilt ist. Dabei kann vorgesehen sein, dass ein stationärer WLAN Sender laufend Abfragesignale aussendet. Tritt ein Fahrzeug in den Reichweitenradius des stationären WLAN Senders ein, so wird der WLAN Empfänger dieses Fahrzeuges das Abfragesignal detektieren und dadurch kann dann das erfindungsgemäße Verfahren initialisiert und ausgeübt werden. Auch im Falle der stationären GSM Sender wird in der Regel eine Mehrzahl vorzusehen sein aufgrund des zellulären Aufbaus.

Schließlich betrifft die Erfindung die Verwendung eines erfindungsgemäßen Informationsübertragungssystems zur gesicherten Übertragung von Inhaltsinformationen von einem beweglichen Objekt zu einem stationären Objekt. Auch hierzu gelten die vorstehenden Ausführungen analog.

Im folgenden wird die Erfindung anhand von lediglich Ausführungsformen darstellenden Figuren näher erläutert. Es zeigen:

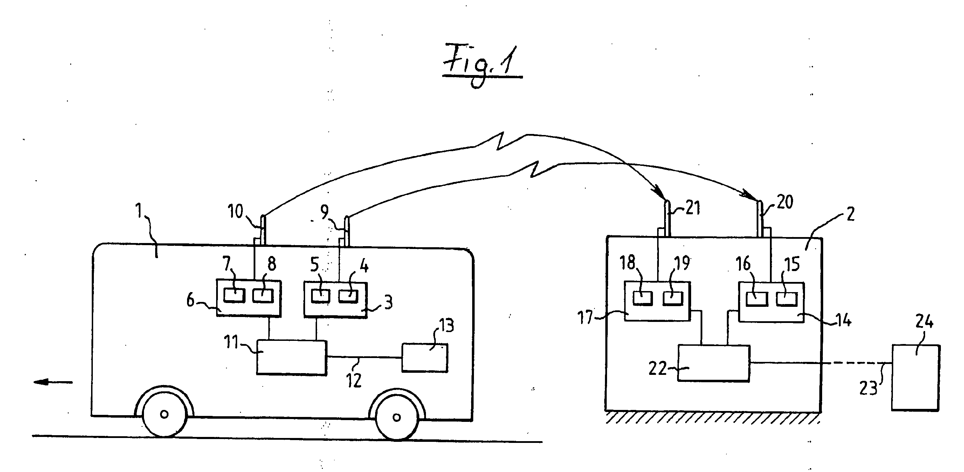

- Fig. 1:: eine schematische Darstellung eines erfindungsgemäßen Informationsübertragungssystems,

In der Figur erkennt man ein bewegliches Objekt 1, beispielsweise ein Schienenfahrzeug, sowie ein stationäres Objekt 2.

Das bewegliche Objekt 1 weist eine WLAN Sende-/Empfangsvorrichtung 3 auf, welche einen WLAN Sender 4 und einen WLAN Empfänger 5 umfasst. Das bewegliche Objekt 1 weist des weiteren eine GSM Sende-/Empfangsvorrichtung 6 mit einem GSM Sender 7 und einem GSM Empfänger 8 auf. Die Sende-/Empfangsvorrichtungen 3,6 sind jeweils mit einer zugeordneten WLAN Antenne 9 bzw. GSM Antenne 10 verbunden. Die Sende/Empfangsvorrichtungen 3,6 sind des Weiteren mit einer Steuereinheit 11 verbunden, welche ihrerseits über einen Fahrzeugdatenbus 12 mit einer zentralen Fahrzeugsteuereinheit 13 verbunden ist. Mittels des Fahrzeugdatenbus 12 erfolgt ein Austausch von Inhaltsinformationen in Form digitaler Datensätze.

Das stationäre Objekt 2 weist eine WLAN Sende-/Empfangsvorrichtung 14 auf, welche einen WLAN Sender 15 und einen WLAN Empfänger 16 umfasst. Das stationäre Objekt 2 weist des weiteren eine GSM Sende-/Empfangsvorrichtung 17 mit einem GSM Sender 18 und einem GSM Empfänger 19 auf. Die Sende-/Empfangsvorrichtungen 14,17 sind jeweils mit einer zugeordneten WLAN Antenne 20 bzw. GSM Antenne 21 verbunden. Die Sende/Empfangsvorrichtungen 14,17 sind des Weiteren mit einer Auswerteeinheit 22, welche auch Steuerungsfunktionen ausüben kann, verbunden, welche ihrerseits über eine Datenleitung 23 mit einem Zentralprozessor 24 zur Fahrzeugsteuerung und Überwachung verbunden ist. Mittels der Datenleitung 23 erfolgt ein Austausch von Inhaltsinformationen in Form digitaler Datensätze.

Die vorstehenden Komponenten bilden ein erfindungsgemäßes Informationsübertragungssystem. Hierbei ist unabhängig vom Ausführungsbeispiel anzumerken, dass ein solches System typischerweise eine Vielzahl von stationären Objekten 2 aufweist, welche entlang einer Fahrstrecke des beweglichen Objektes 1 verteilt angeordnet sind. Dabei ist die Anordung im Falle des Einsatzes von WLAN aus Reichweitegründen so getroffen, dass der orthogonale Abstand zur Fahrstrecke unter 100 m, vorzugsweise unter 50 m, höchstvorzugsweise unter 20 m oder 10 m, liegt. Grundsätzlich ist dieses Abstandsmaß nach Maßgabe der maximalen Reichweite jener Sende-/Empfangsvorrichtung 3,6 bzw. 14,17 mit der geringsten Reichweite zu wählen. Der Abstand sollte dann kleiner als 90%, besser kleiner als 50%, idealerweise kleiner als 20%, der maximalen Reichweite jener Sende-/Empfangsvorrichtung 3,6 bzw. 14,17 mit der geringsten Reichweite sein.

Ebenfalls unabhängig von dem Ausführungsbeispiel ist anzumerken, dass die Sende-/Empfangsvorrichtungen 14,17 nicht notwendigerweise in einem einzigen stationären Objekt 2 baulich vereint sind. Vielmehr können die Sende/Empfangsvorrichtungen 14,17 auch auf verschiedene beabstandete stationäre Objekte 2 verteilt sein, wobei dann die Sende-/Empfangsvorrichtungen 14,17 dennoch mit Steuereinheit 22 verbunden sind. Im Falle von WLAN braucht dann nur die WLAN Sende-/Empfangsvorrichtung 14 nahe bei der Fahrstrecke angeordnet sein, während die GSM Sende-/Empfangsvorrichtung 17 aus Gründen der Reichweite einen größeren Abstand aufweisen kann. Wenn ein GSM-R System aufgebaut wird, empfiehlt sich jedoch die Zusammenfassung gemäß dem Ausführungsbeispiel, da hierfür ohnehin, neben den WLAN Sende-/Empfangsvorrichtungen 14 auch neue GSM-R Sende-/Empfangsvorrichtungen 17 erstellt werden müssen.

Die Steuereinheit 11 enthält ein Betriebsprogramm, welches ein Signal des ersten Senders (4) mit einer Zuordnungskennung sowie einem Schlüsselcode moduliert und ein Signal des zweiten Senders (7) mit einer der Zuordnungskennung des Signals des ersten Senders (4) korrelierten zweiten Zuordnungskennung sowie einer Inhaltsinformation moduliert. Dabei enthält ein Speicher der Steuereinheit 11 eine Tabelle mit Zuordnungskennungspaaren umfassend zwei verschiedene Zuordnungskennungen, nämlich die erste und die zweite Zuordnungskennung, beispielsweise Zeichenfolgen (es kann aber auch mit identischer und unveränderlicher ersten und zeiten Zuordnungskennung gearbeitet werden). Die Steuereinheit 11 umfasst des Weiteren einen Zufallsgenerator, welcher auf ein Initialisierungssignal ein Zuordnungskennungspaar aus der Tabelle per Zufall auswählt und wie vorstehend angegeben die Signalmodulation bewirkt. Das Initialisierungssignal bewirkt dann auch einen Abruf der zu übertragenden Inhaltsinformation aus einem Datenspeicher, beispielsweise aus dem Fahrzeugzentralprozessor 13, und Modulation des Signals des zweiten Senders 7 hiermit. Im Ausführungsbeispiel, jedoch nicht zwingend erfolgt zusätzlich eine Verschlüsselung der Inhaltsinformation in der Steuereinheit 11. Hierzu wird ein Wechselcode in üblicher Weise generiert (beispielsweise aus einer Systemzeit) und die Inhaltsinformation vor der Modulation hiermit verschlüsselt. Der verwendete Wechselcode wird zudem zur Modulation des Signals des ersten Senders (4) eingesetzt, so dass auch der Wechselcode übertragen wird. Hierdurch werden bei Wechselcodes Snychronisierungsprobleme bei der folgenden Entschlüsselung vermieden.

Bei Empfang beider Signale durch das stationäre Objekt werden die Signale in den Empfängern 16, 19 demoduliert und die erhaltenen Datenströme der Auswerteinheit 22 zugeführt. Dort erfolgt zunächst eine Auswertung der ersten und der zweiten Zuordnungskennung durch Vergleich mit Zuordnungskennungspaaren, welche in einem Speicher abgespeichert sind. Die in dem beweglichen Objekt 1 und dem stationären Objekt 2 abgespeicherten Tabellen sind dabei identisch, zumindest sind im stationären Objekt 2 alle Zuordnungskennungspaare des beweglichen Objektes 1 abgespeichert (und ggf. zusätzlich verschiedene Zuordnungskennungspaare aus anderen beweglichen Objekten). Ist dieser Vergleich negativ, so erfolgt entweder keine weitere Verarbeitung von Daten oder eine Fehlermeldung, beispielsweise an den Zantralprozessor 24. Ist der Vergleich dagegen positiv, so wird mittels des Schlüssels aus dem Signal des ersten Senders 4 die Inhaltsinformation des Signals des zweiten Senders 7 entschlüsselt. Ergibt die Entschlüsselung eine nicht verarbeitungskompatible Datenform der Inhaltsinformation (beispielsweise wegen Empfang gefälschter Signale), so erfolgt wiederum entweder keine weitere Verarbeitung der Daten oder eine Fehlermeldung, beispielsweise an den Zantralprozessor 24. Ergibt die Entschlüsselung dagegen eine verarbeitungskompatible Datenform der Inhaltsinformation, so wird die Inhaltsinformation weiter verarbeitet, beispielsweise nach Weiterleitung zum Zentralprozessor 24.

Die vorstehenden Prozesse laufen bei direktionalem Funkverkehr mittels zusätzlich der Sender 15, 18 des stationären Objektes 2 und der Empfänger 5, 8 des beweglichen Objektes 1 analog, nur in umgekehrter Richtung, ab.

Eine Informationsübertragung findet aufgrund der geringen Reichweite von WLAN dabei nicht ständig bzw. zu beliebigen Zeitpunkten statt. Vielmehr sendet das stationäre Objekt 2 in kurze Zeitintervallen ein Abfragesignal. Im einfachsten Falle erfolgt dies ausschließlich mittels des WLAN Senders 15. Es ist aber auch möglich, das vorstehend beschriebene Verfahren auch für das Abfragesignal einzusetzen. Der Empfang des Abfragesignals durch das bewegliche Objekt 1 löst dann in der Steuereinheit 11 das vorstehend beschriebene Initialisierungssignal aus mit der Folge, dass die vorstehend beschriebenen Prozesse ablaufen. Diese Prozesse erfolgen dann vorzugsweise innerhalb eines Zeitintervalles von weniger als 10 s, vorzugsweise weniger als 1 s, was aufgrund der hohen Übertragungsrate eines WLAN Signals unschwer gelingt.

Grundsätzlich ist anzumerken, dass Merkmale eines erfindungsgemäßen Verfahrens bei einer erfindunggemäßen Vorrichtung analog einrichtbar sind und umgekehrt.

## Patentansprüche

1. Verfahren zur drahtlosen Übertragung von Informationen zwischen einem beweglichen Objekt (1) und einem stationären Objekt (2), wobei das bewegliche Objekt (1) zumindest einen Sender (4,7) und das stationäre Objekt zumindest einen Empfänger (16, 19) aufweist,
wobei das bewegliche Objekt (1) zwei miteinander verbundene Sender (4,7) aufweist, welche auf unterschiedlichen Funkfrequenzen Signale emittieren,
**dadurch gekennzeichnet,**
**dass** das stationäre Objekt (2) zwei Empfänger (16, 19) zum Empfang der Signale der zwei Sender (4, 7) aufweist,
wobei ein Signal, enthaltend eine Inhaltsinformation, des ersten Senders (4) mit einem Signal, enthaltend eine Inhaltsinformation oder einen Schlüsselcode, des zweiten Senders (7) mittels je eines Zuordnungskennungcodes in beiden Signalen miteinander korreliert und dann beide Signale emittiert werden,
wobei die zwei Empfänger (16, 19) das Signal des ersten Senders (4) und das damit korrelierte Signal des zweiten Senders (7) empfangen und einer Auswerteinheit (11) zuführen,
wobei in der Auswerteinheit (11) der Zuordnungskennungscode des Signales des ersten Senders (4) und der Zuordnungskennungcode des Signales des zweiten Senders (7) miteinander auf Korrelation verglichen werden, und
wobei im Falle der Korrelation zumindest die Informationen eines der Signale zur weiteren Verarbeitung ausgegeben werden.

2. Verfahren nach Anspruch 1, wobei das Signal des ersten Senders (4) ein WLAN Signal und das Signal des zweiten Senders (7) ein GSM, insbesondere ein GSM-R Signal ist.

3. Verfahren nach einem der Ansprüche 1 bis 2, wobei das bewegliche Objekt (1) ein schienengebundenes Fahrzeug ist.

4. Verfahren nach einem der Ansprüche 1 bis 3, wobei die Inhaltsinformation ausgewählt ist aus der Gruppe bestehend aus "Fahrzeuginformationen, Fahrinformationen, Fahrgastinformationen und Kombinationen solcher Informationen".

5. Verfahren nach einem der Ansprüche 1 bis 4, wobei das stationäre Objekt (2) zusätzlich zwei Sender (15, 18) aufweist, welche auf unterschiedlichen Funkfrequenzen Signale emittieren, wobei das bewegliche Objekt (1) zusätzlich zwei Empfänger (5, 8) zum Empfang der Signale der zwei Sender (15, 18) des stationären Objektes aufweist, und wobei Signale in einer der Übertragung von Sendern (4, 7) des beweglichen Objektes (1) zu Empfängern (16, 19) des stationären Objektes (2) entsprechender Weise übertragen werden.

6. Verfahren nach Anspruch 5, wobei vom stationären Objekt (2) emittierten Signale Inhaltsinformationen Fahrzeugsteuerungsinformationen und/oder Fahrgastinformationen enthalten.

7. Informationsübertragungssystem zur Durchführung eines Verfahrens nach einem der Ansprüche 1 bis 6, mit zwei miteinander verbundenen beweglichen Sendern (4, 7), wobei die Sender (4, 7) von einer Steuereinheit (11) gesteuert werden, mit zwei stationären Empfängern (16, 19), wobei die stationären Empfänger (16, 19) mit einer Auswerteinheit (22) verbunden sind, wobei die Steuereinheit (11) ein Betriebsprogramm enthält, kodierend für die folgenden Verfahrensstufen:
wobei ein Signal, enthaltend eine Inhaltsinformation, des ersten Senders (4) mit einem Signal, enthaltend eine Inhaltsinformation oder einen Schlüsselcode, des zweiten Senders (7) mittels je eines Zuordnungskennungscodes in beiden Signalen miteinader korreliert und dann beide Signale emittiert werden, wobei die zwei Empfänger (16, 19) das Signal des ersten Senders (4) und das damit korrelierte Signal des zweiten Senders (7) empfangen und einer Auswerteinheit (11) zuführen,
wobei in der Auswerteinheit (11) der Zuordnungskennungscode des Signales des ersten Senders (4) und der Zuordnungskennungscode des Signales des zweiten Senders (7) miteinander auf Korrelation verglichen werden,
und wobei im Falle der Korrelation zumindest die Informationen eines der Signale zur weiteren Verarbeitung ausgegeben werden.

8. Verwendung eines Informationsübertragungssystems nach Anspruch 7 zur gesicherten Übertragung von Inhaltsinformationen von einem beweglichen Objekt (1) zu einem stationären Objekt (2).

## Claims

1. A method for wireless transmission of information between a moving object (1) and a stationary object (2), the moving object (1) comprising at least one transmitter (4, 7) and the stationary object comprising at least one receiver (16, 19),
the moving object (1) comprising two interconnected transmitters (4, 7) transmitting signals on different radio frequencies,
**characterized in**
**that** the stationary object (2) comprises two receivers (16, 19) for receiving the signals of the two transmitters (4, 7),
wherein a signal, containing content information, of the first transmitter (4) is correlated with a signal, containing content information or a key code, of the second transmitter (7) by means of one correlation identification code each in both signals and then both signals are emitted,
wherein the two receivers (16, 19) receive the signal of the first transmitter (4) and the signal correlated therewith of the second transmitter (7) and transfer them to a processing unit (11),
wherein in the processing unit (11) the correlation identification code of the signal of the first transmitter (4) and the correlation identification code of the signal of the second transmitter (7) are compared with each other for correlation, and
wherein in case of the correlation at least the information of one of the signals is output for further processing.

2. The method according to claim 1, wherein the signal of the first transmitter (4) is a WLAN signal and the signal of the second transmitter (7) is a GSM, in particular a GSM-R signal.

3. The method according to one of claims 1 to 2, wherein the moving object (1) is a railbound vehicle.

4. The method according to one of claims 1 to 3, wherein the content information is selected from the group comprising "vehicle information, travel information, passenger information and combinations of such information".

5. The method according to one of claims 1 to 4, wherein the stationary object (2) additionally comprises two transmitters (15, 18), which transmit signals on different radio frequencies, wherein the moving object (1) additionally comprises two receivers (5, 8) for receiving the signals of the two transmitters (15, 18) of the stationary object, and wherein the signals are transferred in a way corresponding to the transmission from transmitters (4, 7) of the moving object (1) to receivers (16, 19) of the stationary object (2).

6. The method according to claim 5, wherein the signals transmitted from the stationary object (2) contain content information vehicle control information and/or passenger information.

7. A system for wireless transmission of information for carrying-out a method according to one of claims 1 to 6, comprising two interconnected moving transmitters (4, 7), wherein the transmitters (4, 7) are controlled by a control unit (11), comprising two stationary receivers (16, 19), wherein the stationary receivers (16, 19) are connected with a processing unit (22), wherein the control unit (11) comprises an operating program, coding for the following steps:
wherein a signal, containing content information, of the first transmitter (4) and a signal, containing content information or a key code, of the second transmitters (7) are correlated with each other by means of one correlation identification code each in both signals, and then both signals are transmitted,
wherein the two receivers (16, 19) receive the signal of the first transmitter (4) and the signal correlated therewith of the second transmitter (7) and transfer them to a processing unit (11),
wherein in the processing unit (11) the correlation identification code of the signal of the first transmitters (4) and the correlation identification code of the signal of the second transmitters (7) are compared with each other for correlation, and
wherein in case of the correlation at least the information of one of the signals is output for further processing.

8. The use of a system for wireless transmission of information according to claim 7 for the safe transmission of content information from a moving object (1) to a stationary object (2).

## Revendications

1. Procédé de transmission sans fil d'informations entre un objet en mouvement (1) et un objet stationnaire (2), l'objet en mouvement (1) comprenant au moins un émetteur (4, 7) et l'objet stationnaire comprenant au moins un récepteur (16, 19),
l'objet en mouvement (1) comprenant deux émetteurs (4, 7) interconnectés émettant des signaux sur des radiofréquences différentes,
**caractérisé en ce**
**que** l'objet stationnaire (2) comprend deux récepteurs (16, 19) pour recevoir les signaux des deux émetteurs (4, 7),
dans lequel un signal, contenant des informations de contenu, du premier émetteur (4) est corrélé avec un signal, contenant des informations de contenu ou un code clé, du deuxième émetteur (7) au moyen d'un code d'identification de corrélation respectivement dans les deux signaux et puis les deux signaux sont émis,
dans lequel les deux récepteurs (16, 19) reçoivent le signal du premier émetteur (4) et le signal corrélé avec celui-ci du deuxième émetteur (7) et les transfèrent à une unité de traitement (11),
dans lequel dans l'unité de traitement (11) le code d'identification de corrélation du signal du premier émetteur (4) et le code d'identification de corrélation du signal du deuxième émetteur (7) sont comparés l'un à l'autre selon corrélation, et
dans lequel au cas de la corrélation au moins les informations d'un des signaux sont émises pour traitement ultérieur.

2. Procédé selon la revendication 1, dans lequel le signal du premier émetteur (4) est un signal WLAN et le signal du deuxième émetteur (7) est un signal GSM, en particulier un signal GSM-R.

3. Procédé selon une des revendications 1 à 2, dans lequel l'objet en mouvement (1) est un véhicule circulant sur rails.

4. Procédé selon une des revendications 1 à 3, dans lequel les informations de contenu sont choisies à partir du groupe comprenant des "informations de véhicule, informations de voyage, informations des passagers et combinaisons de telles informations".

5. Procédé selon une des revendications 1 à 4, dans lequel l'objet stationnaire (2) en addition comprend deux émetteurs (15, 18), qui émettent des signaux sur des radiofréquences différentes, dans lequel l'objet en mouvement (1) en addition comprend deux récepteurs (5, 8) pour recevoir les signaux des deux émetteurs (15, 18) de l'objet stationnaire, et dans lequel les signaux sont transférés d'une manière correspondant au transfert à partir des émetteurs (4, 7) de l'objet en mouvement (1) aux récepteurs (16, 19) de l'objet stationnaire (2).

6. Procédé selon la revendication 5, dans lequel les signaux émis à partir de l'objet stationnaire (2) contiennent des informations de contenu, des informations de commande du véhicule et/ou des informations des passagers.

7. Système pour la transmission sans fil d'informations pour exécuter un procédé selon une des revendications 1 à 6, comprenant deux émetteurs en mouvement (4, 7) interconnectés, dans lequel les émetteurs (4, 7) sont commandés par une unité de commande (11), comprenant deux récepteurs stationnaires (16, 19), dans lequel les récepteurs stationnaires (16, 19) sont connectés avec une unité de traitement (22), dans lequel l'unité de commande (11) comprend un programme d'exploitation, codant pour les étapes suivantes:
dans lequel un signal, contenant des informations de contenu, du premier émetteur (4) et un signal, contenant des informations de contenu ou un code clé, du deuxième émetteur (7) sont corrélés l'un avec l'autre au moyen d'un code d'identification de corrélation respectivement dans les deux signaux, et puis les deux signaux sont émis,
dans lequel les deux récepteurs (16, 19) reçoivent le signal du premier émetteur (4) et le signal corrélé avec celui-ci du deuxième émetteur (7) et les transfèrent à une unité de traitement (11),
dans lequel dans l'unité de traitement (11) le code d'identification de corrélation du signal du premier émetteur (4) et le code d'identification de corrélation du signal du deuxième émetteur (7) sont comparés l'un avec l'autre selon corrélation, et
dans lequel au cas de la corrélation au moins les informations d'un des signaux sont émises pour traitement ultérieur.

8. Utilisation d'un système pour transmission sans fil d'informations selon la revendication 7 pour la transmission sûre d'informations de contenu à partir d'un objet en mouvement (1) à un objet stationnaire (2).
